# EUROPEAN PATENT APPLICATION

(11) **EP 4 257 242 A1**
(43) Date of publication of application: **11.10.2023**
(21) Application number: 22877679.5
(22) Date of filing: 21.09.2022
(51) Int. Cl.: B03C 3/06, F02M 27/04, B01D 35/06, H01T 19/00, F24F 8/192, C01B 13/11

(54) **AIR PURIFICATION DEVICE**

(30) Priority: 17.02.2022 RU 2022104157
(71) Applicant: Sergeev, Anton Viktorovich, Krasnodar 350078 (RU); Meshchaninov, Mikhail Aleksandrovich, Zhukovskiy 140184 (RU); Agasarov, Dmitrii Yanovich, Krasnodar 350011 (RU)
(72) Inventor: MESHCHANINOV, Mikhail Aleksandrovich, Zhukovskiy 140184 (RU); AGASAROV, Dmitrii Yanovich, Krasnodar 350011 (RU)
(74) Representative: Spengler, Robert
(86) International application number: PCT/IB2022/058937
(87) International publication number: WO 2023/156839

(57) **Abstract**

The invention relates to air cleaning systems, in particular to electric air cleaners, and it may be used for decontamination of air in different industries. The invention is directed to attaining a technical effect of providing an air cleaning device, where air is cleaned owing to action of corona discharge streamers on air molecules and contamination particles. The technical effect is attained by an air cleaning device that contains a high-voltage pulse generator, an outer electrode provided in form of a grounded metal tube, and an inner electrode rigidly secured along the tube axis by a fastening member and provided in form of a metal rod and configured so as pulsed corona discharge streamers are formed in between the inner and outer electrodes, wherein the inner electrode is spaced by a gap from an output electrode of the high-voltage pulse generator and size of the gap assures disruption of the gap with pulses formed by the high-voltage pulse generator.

## Description

### Field of the invention

The invention relates to air cleaning systems, in particular to electric air cleaners, and it may be used for decontamination of air in different industries.

### Prior art

There are known tubular industrial electric air filters, where a coronizing electrode in form of a wire having diameter of 1.5 to 2.2 millimeters is located along axis of a collecting electrode provided in form of a tube (pages 49-50 of [1]).

A limitation of this known solution is use of constant high voltage to generate constant current corona discharge.

### Summary of the invention

The invention is directed to attaining a technical effect of providing an air cleaning device, where air is cleaned owing to action of corona discharge streamers on air molecules and contamination particles.

The technical effect is attained by an air cleaning device that contains a high-voltage pulse generator, an outer electrode provided in form of a grounded metal tube, an inner electrode provided in form of a metal rod rigidly secured along the tube axis by a fastening member and configured so as pulsed corona discharge streamers are formed in between the inner and outer electrodes. The inner electrode is spaced by a gap from an output electrode of the high-voltage pulse generator, wherein size of the gap assures disruption of the gap with pulses formed by the high-voltage pulse generator.

Preferably, the output electrode of the high-voltage pulse generator is provided in form of a tip directed to the inner electrode.

Preferably, the inner electrode is provided with a tip directed to the output electrode of the high-voltage pulse generator.

Preferably, the inner electrode is provided in form of a metal rod having diameter of 2.5 to 5 millimeters.

Preferably, length of the outer electrode tube is 1 to 1.5 meters and inner diameter thereof is 200 to 300 millimeters.

Preferably, the inner electrode is provided with ends thereof extending for 50 to 100 millimeters beyond the outer electrode tube.

Preferably, the fastening member of the inner electrode is provided in form of a one- or two- or three-thread screw electrically connected to the inner electrode and secured on a portion of the inner electrode inside the outer electrode tube, wherein the screw surface is formed by a metal strip with outer edge attached to the outer electrode via isolating members.

Preferably, the device is configured so as the size of the gap between ends of the inner electrode and the output electrode of the high-voltage pulse generator may be adjusted.

Preferably, the device may be connected to a gas removal system that provides passing a flow of air to be cleaned through the device from the high-voltage pulse generator side.

### Brief description of drawings

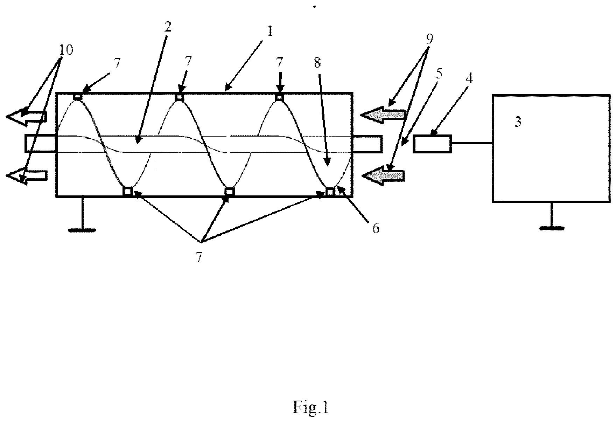

Fig. 1 shows a schematic diagram of an air cleaning device, where the following designators are used:
- 1: - outer electrode in form of a metal tube;
- 2: - inner electrode;
- 3: - high-voltage pulse generator;
- 4: - output electrode of high-voltage pulse generator;
- 5: - gap between ends of electrodes 2 and 4;
- 6: - fastening member of inner electrode in form of one-thread screw;
- 7: - isolating members;
- 8: - blade of one-thread screw;
- 9: - flow of contaminated air;
- 10: - flow of decontaminated air.

### Detailed description of the invention

The invention may be implemented as a device comprising a high-voltage pulse generator (3), an outer electrode (1) provided in form of a grounded metal tube and an inner electrode (2) installed along axis of the tube using a fastening member (6) and spaced by a gap (5) from an output electrode (4) of the high-voltage pulse generator. The fastening member (6) of the inner electrode (2) is provided in form of a one-thread screw with a blade (8) attached to the outer electrode (1) via isolating members (7). The device is connected to a gas removal system (not shown in drawings) that provides motion of a flow of air to be cleaned through the device from side where the output electrode (4) of the high-voltage pulse generator (3) is located.

The device operates as follows. A contaminated air flow (9) is fed into the device. The high-voltage pulse generator (3) provides a high-voltage pulse to the output electrode (4). When voltage of the output electrode (4) exceeds a breakdown voltage of the gap (5), disruption of the gap (5) takes place and the high-voltage pulse reaches the inner electrode (2) with the blade (8). As known from [2], corona discharge streamers occur between the inner electrode (2) with the blade (8) and the outer electrode (1) at each pulse, which cause formation of plural charged particles in the area between the inner and outer electrodes and charging contamination particles in the air. The contamination particles are attracted to the outer electrode that has opposite electrical charge due to electrostatic induction, so the contamination particles are removed from the contaminated air flow (9). Simultaneously, plasma of corona discharge streamers affects water molecules contained in the air to be cleaned and causes formation of free radicals upon destruction of these molecules: H₂O →OH• + H•. Moreover, other active substances like O₃, O₂(a¹Δ), H₂O₂, OH, O(³P), NO, HNO₂andHNO₃ are formed due to action of corona discharge streamers on molecules of air. Streamer corona discharge also causes ultraviolet (UV) radiation. The above-mentioned active substances and UV radiation destroy any organic substances contained in the air to be cleaned, thus providing complete destruction thereof and formation of harmless gaseous products, namely, water and carbon dioxide. Oxidation process in water for organic substances is a chain reaction [3]. Non-organic substances deposited on the outer electrode (1) are destroyed by generated acids. A low rate chain reaction may be initiated by atmospheric oxygen and ozone. A high rate chain reaction is initiated by OH• radicals. In other words, plasma-chemical destruction of both organic and inorganic substances contained in the contaminated air flow (9) is provided in the device. A decontaminated air flow (10) leaves the device.

Thus, the technical effect is attained, which consists in providing an air cleaning device, where air cleaning is assured by action of pulsed corona discharge streamers on air molecules and contamination particles.

### List of information sources

[1] 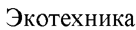 . 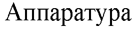 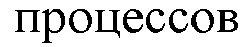 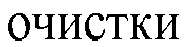 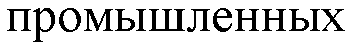 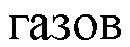 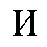 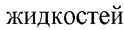 : 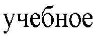 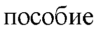 / 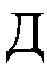 . E. 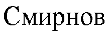 [ 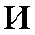 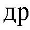 . ]; 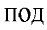 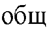 . 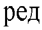 . 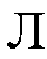 .B. 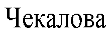 , A. B. 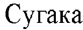 . - 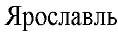 : 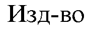 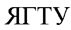 , 2013. - 180 c. ISBN 978-5-9914-0351-1. (Ecotechnics. Equipment for cleaning processes for industrial gases and liquids: A study guide / D.E. Smirnov (et al.); gen. ed. by L.V. Chekalov, A.V. Sugak. - Yaroslavl: YaGTU publ., 2013. - 180 pages. ISBN 978-5-9914-0351-1.)
[2] 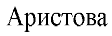 H.A., 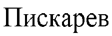 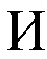 .M., 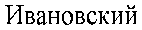 A.B., 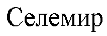 B. 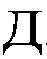 ., 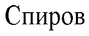 Γ.M., 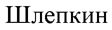 C. 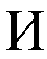 . 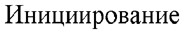 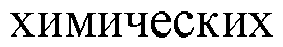 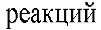 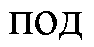 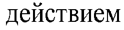 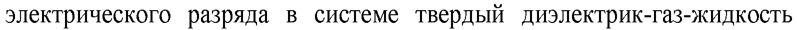 // 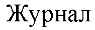 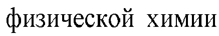 . 2004. T. 78. 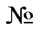 7. C. 1326-1331. (Aristova N.A., Piskarev I.M., Ivanovskiy A.V., Selemir V.D., Spirov G.M., Shlepkin S.I. Initiation of chemical reactions by electrical discharge in dielectric-gas-liquid configuration // Physical Chemistry Journal, 2004, Vol. 78, #7, pages 1326-1331.)
[3] 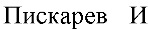 .M. 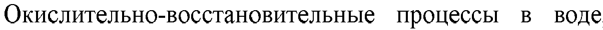 , 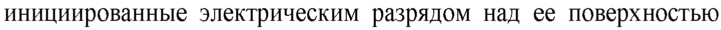 // 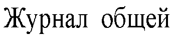 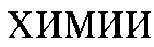 . 2001. T. 71. 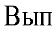 . 10. C. 1622. (Piskarev I.M. Oxidation-reduction processes in water initiated by electrical discharge above water surface // General Chemistry Journal, 2001, Vol. 71, Issue 10, page 1622.)

## Claims

1. An air cleaning device comprising a high-voltage pulse generator, an outer electrode in form of a metal tube, and an inner electrode, wherein the outer electrode is grounded and the inner electrode is provided in form of a metal rod and rigidly secured along axis of the tube using a fastening member and configured so as pulsed corona discharge streamers are formed in between the inner and outer electrodes, wherein the inner electrode is spaced by a gap from an output electrode of the high-voltage pulse generator, and wherein size of the gap assures disruption of the gap with pulses formed by the high-voltage pulse generator.

2. The air cleaning device of claim 1, wherein the output electrode of the high-voltage pulse generator is provided in form of a tip directed to the inner electrode.

3. The air cleaning device of claim 1, wherein the inner electrode is provided with a tip directed to the output electrode of the high-voltage pulse generator.

4. The air cleaning device of claim 1, wherein the inner electrode is provided in form of a metal rod having diameter of 2.5 to 5 millimeters.

5. The air cleaning device of claim 1, wherein length of the outer electrode tube is in range of1 to 1.5 meters and inner diameter of the outer electrode tube is in range of 200 to 300 millimeters.

6. The air cleaning device of claim 1, wherein ends of the inner electrode extend for a distance in range of 50 to 100 millimeters beyond the outer electrode tube.

7. The air cleaning device of claim 1, wherein the fastening member of the inner electrode is provided in form of a one- or two- or three-thread screw electrically connected to the inner electrode and secured on a portion of the inner electrode inside the outer electrode tube, and the screw surface is formed by a metal strip and outer edge of the metal strip is attached to the outer electrode via isolating members.

8. The air cleaning device of claim 1, wherein size of the gap between ends of the inner electrode and the output electrode of the high-voltage pulse generator is adjustable.

9. The air cleaning device of claim 1, further connectable to a gas removal system that provides passing a flow of air to be cleaned through the device from side where the high-voltage pulse generator is located.
